# EUROPÄISCHE PATENTSCHRIFT

(11) **EP 1 031 594 B1**
(45) Veröffentlichungstag und Bekanntmachung des Hinweises auf die Patenterteilung: **21.04.2004**
(21) Anmeldenummer: 00102292.0
(22) Anmeldetag: 17.02.2000
(51) Int. Cl.: C08J 5/12, B32B 5/24

(54) **Verfahren zur Kaschierung von textilen Flächengebilden auf expandierendem Partikelschaum oder geschäumte Formteile**
Process for laminating textiles upon expanded particle foams or foamed articles
Procédé de recouvrement de mousses de particules expandées ou d'objets mousseux

(30) Priorität: 26.02.1999 DE 19908486
(43) Veröffentlichungstag der Anmeldung: 30.08.2000
(73) Patentinhaber: Wacker Polymer Systems GmbH & Co. KG, 84489 Burghausen (DE)
(72) Erfinder: Kohlhammer, Klaus, Dr., 84533 Marktl (DE); Schmidt, Claudia, 84503 Altötting (DE); Hashemzadeh, Abdulmajid, Dr., 84508 Burgkirchen (DE); Bauer, Doris, Dr., 80997 München (DE)
(74) Vertreter: Schuderer, Michael, Dr.

(56) Entgegenhaltungen:
- EP-A- 0 290 667
- EP-A- 0 470 928
- WO-A-86/07010
- WO-A-91/03376
- WO-A-94/20661
- DE-A- 19 718 315
- DE-C- 4 242 059
- PATENT ABSTRACTS OF JAPAN vol. 1995, no. 10, 30. November 1995 (1995-11-30) & JP 07 179835 A (IPPOSHA OIL IND CO LTD), 18. Juli 1995 (1995-07-18)
- PATENT ABSTRACTS OF JAPAN vol. 016, no. 466 (C-0989), 28. September 1992 (1992-09-28) & JP 04 164984 A (NIPPON SYNTHETIC CHEM IND CO LTD:THE), 10. Juni 1992 (1992-06-10)

## Beschreibung

Die Erfindung betrifft ein Verfahren zur Kaschierung von textilen Flächengebilden auf expandierenden Partikelschaum oder geschäumte Formteile, unter Verwendung einer pulverförmigen Polymerzubereitung als Klebemittel.

Der Trend zu immer leichteren Bauteilen für den Einsatz in Fahrzeugen, Flugzeugen oder auch Sport- und Freizeitartikeln führte in der Vergangenheit zur Entwicklung von geschäumten Formkörpern mit hoher mechanischer Stabilität und größtmöglicher Gewichtsreduzierung. Zur Herstellung dieser geschäumten Formkörper haben sich Materialien wie expandierbares Polystyrol (EPS) oder expandierbare Compounds auf Basis EPS und Polyphenylenoxid (PPO) bewährt. Letzteres ist beispielsweise unter dem Handelsnamen Noryl® EF (eingetragenes Warenzeichen der General Electric Co. USA) erhältlich.

Diese Compounds lassen sich wie EPS, EPE (expandierbares Polyethylen) oder EPP (expandierbares Polypropylen) mit Wasserdampf in geeigneten Formwerkzeugen zu dem gewünschten Formteil schäumen. Mit diesem an sich bekannten Verfahren lassen sich bequem Formkörper sowohl für die Automobilinnenausstattung wie beispielsweise Türverkleidungen, Seitenaufprallpolster, Kniepolster, Kerne für Kopfstützen, Sonnenblenden, Hutablagen als auch für Außenanwendungen wie beispielsweise Stoßfänger herstellen. Sportartikel wie Surfbretter sind Beispiele für Anwendungen, die nicht den Kraftfahrzeugbau betreffen.

Nicht alle der oben aufgeführten Anwendungen lassen sich jedoch mit den reinen Schaumteilen erschließen. Hohe Anforderungen - wie beispielsweise Ansprüche an das optische Erscheinungsbild oder Mindestforderungen an eine hohe Maßhaltigkeit sowie an eine geringe Wärmeausdehnung - erfordern es, daß die geschäumten Formteile mit einer Außenhaut überzogen werden. Dabei kommen neben den üblichen Weichfolien mit und ohne Schaumrücken insbesondere Textilien oder Faservliese zum Einsatz. Letztere sind wasserdampfdurchlässig und werden vor dem eigentlichen Aufschäumen in das entsprechende Formteil eingelegt. Ein solches Verfahren wird als Inmould-Skinning bezeichnet und ist beispielsweise in der Herstellerbroschüre Noryl® EF-*Profil* (Seite 19) der Fa. GE-Plastics beschrieben. Zur Haftungsvermittlung zwischen Schaum und Faservlies werden dabei Heißschmelzkleber eingesetzt, deren Aktivierungstemperatur nicht oberhalb der Glasstufe des Schaummaterials liegen darf. Ein hohe Wärmebeständigkeit der Laminate, insbesondere oberhalb von 80°C, ist mit diesen Klebern natürlich (aufgrund deren Erweichung) nicht erreichbar.

Aus der EP-A 623491 ist ein Material für Verkleidungselemente von Fahrzeugkarrosserien bekannt, welches aus einem Schaumkern besteht, der mit einem Schlauch überzogen ist. Der Schlauch wird dabei an den Schaumkörper geklebt oder thermisch befestigt.

Ein weiteres Inmould-Skinning-Verfahren für einen Türverkleidungsträger ist in der EP-A 710578 beschrieben. Dabei wird eine Glasfasermatte vor dem eigentlichen Schäumprozeß in das Formwerkzeug drapiert und der expandierende Schaum gegen ein Glasvlies angeschäumt, ohne daß dabei ein Binder benötigt wird. Aber auch dieses Verfahren zeigt eine ungenügende Festigkeit des Glasvlies-Schaumverbundes bei Temperaturen oberhalb von 80°C.

Nachdem in der Automobilindustrie für derartige Trägersysteme und selbsttragende Formteile typischerweise Temperaturbeständigkeiten von 80°C und darüber gefordert werden, lag dieser Erfindung die Aufgabe zugrunde, ein Verfahren zur Verfügung zu stellen, mit dem textile Flächengebilde, vorzugsweise Glasfaservliese, dauerhaft und temperaturbeständig mit expandierendem Partikelschaum und den resultierenden geschäumten Formkörpern verbunden werden können. Um unnötige Arbeitsgänge und die damit verbunden Kosten einsparen zu können, sollte das Bindersystem vorzugsweise bereits vor dem Inmould-Skinning auf dem zu kaschierenden Glasvlies aufgebracht und erst beim Schäumvorgang aktiviert werden.

Gegenstand der Erfindung ist ein Verfahren zur Kaschierung von textilen Flächengebilden auf expandierenden Partikelschaum oder geschäumte Formteile, unter Verwendung einer pulverförmigen Polymerzubereitung auf der Basis von Mischpolymerisaten von einem oder mehreren Monomeren aus der Gruppe umfassend Vinylester, Acrylsäureester, Methacrylsäureester, Vinylaromaten und Vinylchlorid und von 0.01 bis 25 Gew%, bezogen auf das Gesamtgewicht des Mischpolymerisats, von einem oder mehreren ethylenisch ungesättigten, carboxylgruppenhaltigen Monomeren als Klebemittel.

Geeignete carboxylgruppenhaltige Mischpolymerisate sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten wie Styrol, und Vinylchlorid. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, beispielsweise VeoVa5^{R} oder VeoVa9^{R}. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat.

Bevorzugte carboxylgruppenhaltige Mischpolymerisate sind solche von Vinylacetat, gegebenenfalls mit weiteren Vinylestern wie VeoVa9; von Vinylchlorid, gegebenenfalls mit Vinylacetat; Mischpolymerisate von Vinylacetat mit Methacrylsäureestern oder Acrylsäureestern; Mischpolymerisate von Methacrylsäureestern und/oder Acrylsäureestern; und besonders bevorzugt Mischpolymerisate von Styrol und den genannten Acrylsäureestern, welche jeweils 0.01 bis 25 Gew% carboxylgruppenhaltige Monomereinheiten enthalten.

Geeignete ethylenisch ungesättigte, carboxylgruppenhaltige Monomere sind ethylenisch ungesättigte Mono- oder Dicarbonsäuren wie Acrylsäure, Methacrylsäure, Maleinsäure, Fumarsäure, Itaconsäure. Vorzugsweise beträgt der Gehalt an carboxylgruppenhaltigen Comonomereinheiten 0.01 bis 15 Gew%, bezogen auf das Gesamtgewicht des Mischpolymerisats.

Gegebenenfalls können die Mischpolymerisate 0.01 bis 10.0 Gew%, bezogen auf das Gesamtgewicht des Mischpolymerisats, noch Hilfsmonomere aus der Gruppe der ethylenisch ungesättigten Carbonsäureamide, vorzugsweise Acrylamid, aus der Gruppe der ethylenisch ungesättigten Sulfonsäuren bzw. deren Salze, vorzugsweise Vinylsulfonsäure, aus der Gruppe der mehrfach ethylenisch ungesättigten Comonomeren, beispielsweise Divinyladipat, Diallylmaleat, Allylmethacrylat oder Triallylcyanurat und/oder aus der Gruppe der N-Methylol(meth)acrylamide sowie deren Ether wie Isobutoxy- oder n-Butoxyether enthalten.

In einer besonders bevorzugten Ausführungsform enthalten die Mischpolymerisate jeweils 0.01 bis 10 Gew% Acrylsäure und/oder Methacrylsäure, gegebenenfalls in Kombination mit 0.01 bis 2 Gew% Acrylamid.

Bevorzugt ist, daß die Zusammensetzung des Mischpolymerisats so gewählt wird, daß eine Glastemperatur Tg oder ein Schmelzpunkt von größer 30°C, vorzugsweise von 55°C bis 150°C, resultiert. Die Glasübergangstemperatur Tg und der Schmelzpunkt der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Vorzugsweise beträgt das gewichtsmittlere Molekulargewicht Mw zwischen 10000 und 400000, besonders bevorzugt 60000 und 300000. Das Molekulargewicht und die Molekulargewichtsverteilung läßt sich in bekannter Weise während der Polymerisation beispielsweise durch die Verwendung von Reglersubstanzen und über die Polymerisationstemperatur einstellen und kann mittels Gelpermeationschromatographie (GPC) gemessen werden.

Die Herstellung der Mischpolymerisate erfolgt in an sich bekannter Weise, vorzugsweise nach dem Emulsionspolymerisationsverfahren, wie beispielsweise in der WO-A 94/20661 beschriebenen. In der Polymerzubereitung liegt das Mischpolymerisat in Pulverform vorl, als Polymerpulver und pulverförmige Polymerzubereitungen. Zur Herstellung der Pulver wird die mittels Emulsionspolymerisation erhältliche Polymerdispersion getrocknet. Die Trocknung kann mittels Sprühtrocknung, Gefriertrocknung, Walzentrocknung oder durch Koagulation der Dispersion und anschließender Wirbelschichttrocknung erfolgen. Bevorzugt wird die Sprühtrocknung. Bevorzugt erfolgt die Herstellung des Mischpolymerisats und dessen Trocknung ohne Zusatz von Schutzkolloid.

Sollte es aus Gründen der vom Anwender geforderten Temperaturbeständigkeit erforderlich sein, so kann die Polymerzubereitung noch vernetzungsfähige Verbindungen enthalten. Vorzugsweise sind dies Verbindungen, die mit den oben angeführten Carbonsäuregruppen eine dauerhafte kovalente oder ionische Verbindung eingehen können. Bevorzugt sind dabei Vernetzerkomponenten, die befähigt sind, mit Carbonsäuregruppen eine kovalente Bindung einzugehen. Sie enthalten vorzugsweise mindestens zwei der nachstehend aufgeführten funktionellen Gruppen pro Molekül: Epoxide, Organo-Halogenverbindungen, Aziridine, Carbodiimide, Oxazoline, Alkohole, Amine, Aminosilane, Amino-Formaldehyde, Isocyanate. Bevorzugt werden auch polyfunktionelle N,N,N',N'-Tetrakis-(2-hydroxyalkyl)-Adipamide (Primide).

Bevorzugt werden dabei feste, pulverförmige Verbindungen, welche zwei oder mehr Epoxid- oder Isocyanatgruppen aufweisen, mit einem Schmelzpunkt von 40°C bis 150°C. Üblicherweise werden solche Vernetzer eingesetzt, welche unterhalb der Glastemperatur des Polymerschaumes schmelzen. Beispiele für geeignete Epoxidvernetzer sind solche vom Bisphenol-A-Typ, das heißt Kondensationsprodukte von Bisphenol-A und Epichlorhydrin oder Methylepichlorhydrin, sowie Triglycidyl-Isocyanurat (TGIC). Derartige Epoxidvernetzer sind im Handel, beispielsweise unter den Handelsnamen Epikote oder Eurepox, erhältlich. Geeignete Diisocyanate sind ebenfalls gängige Handelsprodukte, beispielsweise m-Tetramethylxylen-Diisocyanat (TMXDI), Methylendiphenyl-Diisocyanat (MDI). Der Gehalt an Vernetzer beträgt im allgemeinen von 0.1 bis 25 Gew%, vorzugsweise von 4 bis 12 Gew%, bezogen auf das pulverförmige Mischpolymerisat.

Bei der erfindungsgemäßen Verfahrensweise zur Verklebung von textilen Flächengebilden auf expandierenden Polymerschaum wird die Polymerpulverzubereitung, auf das textile Flächengebilde aufgetragen. Bei den textilen Flächengebilden kann es sich um Textilien, Fasern, Garnen, Gewirre, Gewebe oder Gelege handeln. Das Fasermaterial sollte geeignet sein, eine Verstärkung des geschäumten Formteils zu bewirken und besteht vorzugsweise aus harten Fasern wie Glasfaser, Kohlefaser, Aramidfaser. Bevorzugt werden Glasfasermatten und Glasfaservliese. Es können aber auch einseitig mit thermoplastischem Polymer, beispielsweise Polyethylen, Polypropylen oder Polyester, beschichtete textile Flächengebilde eingesetzt werden. Die Aufbringung der Polymerzubereitung erfolgt dann auf die unbeschichtete Seite des textilen Flächengebildes. Die zur Verklebung notwendige Bindermenge (auf Feststoff bezogen) variiert im allgemeinen zwischen 1 und 1000 g/m², wobei Mengen zwischen 10 und 250 g/m² bevorzugt und eine Bindermenge von 25 bis 100 g/m² ganz besonders bevorzugt wird.

Gegebenenfalls kann nach der Auftragung der Polymerzubereitung diese auf dem textilen Flächengebilde bei erhöhter Temperatur, im allgemeinen bei 150°C bis 180°C fixiert (angesintert) werden. Anschließend wird das so vorbehandelte textile Flächengebilde in ein geeignetes Formwerkzeug eingelegt. Es kann aber auch so vorgegangen werden, daß das textile Flächengebilde als erstes in das Formwerkzeug eingelegt wird und anschließend die Polymerzubereitung aufgetragen und gegebenenfalls angesintert wird.

Die zu schäumenden Polymerpartikel werden in das Formwerkzeug eingetragen und vorzugsweise mit Heißdampf aufgeschäumt, wobei der Schaum gegen das mit der Polymerzubereitung behaftete textile Flächengebilde geschäumt wird. Der expandierte Partikelschaum besteht dabei aus expandiertem Polystyrol (EPS), einem expandiertem Compound bestehend aus EPS und Polyphenylenoxyd (EPS/PPO) (Handelsname Noryl® EF des Fa. GE-Plastics, bzw. Caril® der Fa. Shell), expandiertem Polyethylen (EPE) oder expandiertem Polypropylen (EPP). Bevorzugt werden EPS und EPS/PPO-Compounds, wobei letztere ganz besonders bevorzugt werden. Nach dem Schäumvorgang wird das mit dem textilen Flächengebilde kaschierte Formteil entformt. Gegebenenfalls kann das Formteil zur Restentgasung sowie zur Herstellung der endgültigen Formstabilität und des Endmaßes noch thermisch nachbehandelt werden. Die Nachbehandlung erfolgt dabei vorzugsweise im Temperaturbereich von 60°C bis 110°C.

Neben den eben beschriebenen Verfahrensvarianten des Inmould-Skinnings können auch fertig geschäumte Formteile aus den obengenannten Materialien (EPS, EPS/PPO, EPE, EPP) mit textilen Flächengebilden kaschiert werden. Dazu wird die Polymerzubereitung auf ein textiles Flächengebilde oder auf ein bereits geschäumtes Formteil aufgetragen und gegebenenfalls bei den oben angegebenen Temperaturbedingungen angesintert. Anschließend wird das textile Flächengebildes auf das fertig geformte Formteil unter Anwendung eines gegenüber den Umgebungsbedingungen erhöhten Druckes und einer erhöhten Temperatur, vorzugsweise bei einem Druck von 0.1 bis 30 bar und einer Temperatur von 80°C bis 150°C, entweder in einem entsprechenden Formwerkzeug oder außerhalb des zum Schäumen verwendeten Formwerkzeuges, aufkaschiert. Gegebenenfalls kann auch bei dieser Verfahrensvariante eine thermische Nachbehandlung des Formteils zur Restentgasung sowie zur Herstellung der endgültigen Formstabilität und des Endmaßes, unter den oben angegebenen bevorzugten Bedingungen, erfolgen.

In der ganz besonders bevorzugten Variante wird die Polymerzubereitung auf eine Glasfaservlies aufgetragen. Die Auftragung erfolgt vorzugsweise auf Rollenware mittels einer Pulverstreueinrichtung oder eines elektrostatischen Sprühverfahrens. Anschließend wird bei 150°C bis 180°C an das Glasfaservlies angesintert. Dieses Vlies wird entsprechend den Bedürfnissen des Formteils konfektioniert und in das Formwerkzeug eingelegt. Anschließend wird ein expandierender Compound bestehend aus Polystyrol und Polyphenylenoxyd (EPS/PPO) in dem Formwerkzeug mittels heißem Wasserdampf aufgeschäumt und gegen das Glasvlies geschäumt. Nach der Entformung kann gegebenenfalls noch bei 80°C bis 100°C entgast werden.

Ein weiterer Gegenstand der Erfindung sind Kaschiererzeugnisse aus expandiertem Partikelschaum und einem darauf aufkaschierten textilen Flächengebilde, gebunden mit einem pulverförmigen Polymer auf der Basis von Mischpolymerisaten von einem oder mehreren Monomeren aus der Gruppe umfassend Vinylester, Acrylsäureester, Methacrylsäureester, Vinylaromaten und Vinylchlorid und von 0.01 bis 25 Gew%, bezogen auf das Gesamtgewicht des Mischpolymerisats, von einem oder mehreren ethylenisch ungesättigten, carboxylgruppenhaltigen Monomeren.

Die Kaschiererzeugnisse sind leichte, steife, formstabile und temperaturbeständige Formteile zum Einbau in Kraftfahrzeuge, Flugzeuge, Wasserfahrzeuge oder in andere Maschinen bzw. Haushaltsgeräte. Bevorzugt werden die Formteile für den Kraftfahrzeugbau, insbesondere für den Einbau in Kraftfahrzeuge eingesetzt. Mit dem erfindungsgemäßen Verfahren werden geschäumte Erzeugnisse erhalten, welche eine hohe Temperaturbeständigkeit von 90°C und darüber aufweisen. Mit den bisher verwendeten Schmelzklebern oder dem in der EP-A 710578 beschriebenen Verfahren ohne Binder erhält man Erzeugnisse mit einer ungenügenden Temperaturbeständigkeit der Verklebung oberhalb von 80°C. Nicht zu erwarten war die überraschend hohe Temperaturbeständigkeit der erfindungsgemäßen Verklebung bei 80°C und darüber, selbst wenn die Glastemperatur oder die Erweichungstemperatur des entsprechenden Copolymerisats deutlich darunter liegt.

### Beispiel 1:

Ein Carboxylgruppenhaltiges Styrol-Butylacrylat-Copolymer-Pulver (Tg = 59°C) wurde mittels eines elektrostatischen Sprühauftrages gleichmäßig auf eine im Formwerkzeug eingelegte Glasfasermatte (Flächengewicht ca. 30 g/m²) aufgetragen (Auftragsgewicht: ca. 30 g/m²) und bei 180°C 90 sec angesintert. Das so behandelte Glasvlies wurde anschließend bei 120°C mit ca. 1.2 bar gegen ein geschäumtes Formteil aus EPS/PPO kaschiert. Zur Prüfung der Verbundfestigkeit wurde das kaschierte Formteil 1 h bei 90°C gelagert. Anschließend wurde versucht das aufkaschierte Glasvlies händisch abzuschälen. Ergebnis: Das Glasvlies ließ sich nicht mehr von,der Schaumoberfläche ablösen. Vielmehr wurden die Glasfasern aus dem Glasvlies bzw. Schaumpartikel aus der Oberfläche des Formteils herausgerissen, ohne daß es beim Glasvlies/Formteil-Verbund zu einer Delaminierung gekommen ist.

### Beispiel 2:

Ein Carboxylgruppenhaltiges Vinylacetat-Vinylchlorid-Copolymer-Pulver (Tg = 48°C) wurde mittels eines elektrostatischen Sprühauftrages gleichmäßig auf eine im Formwerkzeug eingelegte Glasfasermatte (Flächengewicht ca. 47 g/m²) aufgetragen (Auftragsgewicht: ca. 50 g/m²) und bei 170°C 2 min angesintert. Das so behandelte Glasvlies wurde anschließend bei 120°C mit ca. 1.2 bar gegen ein geschäumtes Formteil aus EPS/PPO kaschiert. Zur Prüfung der Verbundfestigkeit wurde das kaschierte Formteil 1 h bei 90°C gelagert. Anschließend wurde versucht das aufkaschierte Glasvlies händisch abzuschälen. Ergebnis: Das Glasvlies ließ sich nicht mehr von der Schaumoberfläche ablösen. Vielmehr wurden die Glasfasern aus den Glasvlies bzw. Schaumpartikel aus der Oberfläche des Formteils herausgerissen, ohne daß es beim Glasvlies/Formteil-Verbund zu einer Delaminierung gekommen ist.

### Beispiel 3:

Ein Carboxylgruppenhaltiges Methylmethacrylat-Butylacrylat-Copolymer-Pulver (Tg = 57°C) wurde mittels eines elektrostatischen Sprühauftrages gleichmäßig auf eine Glasfasermatte (Flächengewicht ca. 30 g/m²) aufgetragen (Auftragsgewicht: ca. 50 g/m²) und bei 170°C 2 min angesintert. Das so behandelte Glasvlies wurde anschließend in ein geeignetes Formwerkzeug eingelegt, und die zu expandierenden PS/PPO-Partikel zugegeben. Anschließend wurde das PS/PPO durch Heißdampf gegen das Glasvlies geschäumt. Der so hergestellte Formkörper wurde entformt und bei 80°C über mehrere Stunden entgast. Zur Beurteilung der Festigkeit nach einem Klimawechsel wurde das kaschierte Schaumteil insgesamt dreimal abwechselnd jeweils mehrere Stunden bei 90°C und bei -20°C gelagert. Anschließend wurde versucht das aufkaschierte Glasvlies händisch abzuschälen. Ergebnis: Das Glasvlies ließ sich nicht mehr von der Schaumoberfläche ablösen. Vielmehr wurden die Glasfasern aus den Glasvlies bzw. Schaumpartikel aus der Oberfläche des Formteils herausgerissen, ohne daß es beim Glasvlies/Formteil-Verbund zu einer Delaminierung gekommen ist.

### Vergleichsbeispiel 1:

Ein Polyethylenpulver wurde mittels eines elektrostatischen Sprühauftrages gleichmäßig auf eine im Formwerkzeug eingelegte Glasfasermatte (Flächengewicht ca. 30 g/m²) aufgetragen (Auftragsgewicht: ca. 30 g/m²) und bei 180°C/90 sec angesintert. Das so behandelte Glasvlies wurde anschließend bei 120°C mit ca. 1.2 bar gegen ein geschäumtes Formteil aus EPS/PPO kaschiert. Zur Prüfung der Verbundfestigkeit wurde das kaschierte Formteil 1 h bei 90°C gelagert. Anschließend wurde versucht das äufkaschierte Glasvlies händisch abzuschälen. Ergebnis: Das Glasvlies ließ sich mühelos vom geschäumten Formteil abschälen. Die angestrebte Verbundfestigkeit wurde also nicht erzielt.

## Patentansprüche

1. Verfahren zur Kaschierung von textilen Flächengebilden auf expandierenden Partikelschaum oder geschäumte Formteile, unter Verwendung einer pulverförmigen Polymerzubereitung auf der Basis von Mischpolymerisaten von einem oder mehreren Monomeren aus der Gruppe umfassend Vinylester, Acrylsäureester, Methacrylsäureester, Vinylaromaten und Vinylchlorid und von 0.01 bis 25 Gew%, bezogen auf das Gesamtgewicht des Mischpolymerisats, von einem oder mehreren ethylenisch ungesättigten, carboxylgruppenhaltigen Monomeren als Klebemittel.

2. Verfahren nach Anspruch 1, **dadurch gekennzeichnet, daß** Mischpolymerisate von Vinylacetat, gegebenenfalls mit weiteren Vinylestern; von Vinylchlorid, gegebenenfalls mit Vinylacetat; von Vinylacetat mit Methacrylsäureestern oder Acrylsäureestern; von Methacrylsäureestern und/oder Acrylsäureestern; von Styrol und Acrylsäureestern, welche jeweils 0.01 bis 25 Gew% ethylenisch ungesättigte Monooder Dicarbonsäuren enthalten, eingesetzt werden.

3. Verfahren nach Anspruch 1 oder 2, **dadurch gekennzeichnet, daß** die Mischpolymerisate jeweils 0.01 bis 10 Gew% Acrylsäure und/oder Methacrylsäure, gegebenenfalls in Kombination mit 0.01 bis 2 Gew% Acrylamid, enthalten.

4. Verfahren nach Anspruch 1 bis 3, **dadurch gekennzeichnet, daß** die Zusammensetzung der Mischpolymerisate so gewählt wird, daß eine Glastemperatur Tg oder ein Schmelzpunkt von größer 30°C resultiert.

5. Verfahren nach Anspruch 1 bis 4, **dadurch gekennzeichnet, daß** die Polymerzubereitung noch 0.1 bis 25 Gew%, bezogen auf das pulverförmige Mischpolymerisat, feste, pulverförmige Verbindungen, welche zwei oder mehr Epoxidoder Isocyanatgruppen aufweisen, mit einem Schmelzpunkt von 40°C bis 150°C, enthält.

6. Verfahren nach Anspruch 1 bis 5, **dadurch gekennzeichnet, daß** die Polymerzubereitung auf das textile Flächengebilde aufgetragen wird, in einem Formwerkzeug die zu schäumenden Polymerpartikel eingetragen werden, und der Schaum gegen das mit der Polymerpulverzubereitung behaftete textile Flächengebilde geschäumt wird.

7. Verfahren nach Anspruch 1 bis 5, **dadurch gekennzeichnet, daß** die Polymerzubereitung auf ein textiles Flächengebilde oder auf ein bereits fertig geschäumtes Formteil aufgetragen wird, und anschließend das textile Flächengebilde auf das fertig geformte Formteil unter Anwendung eines erhöhten Druckes und einer erhöhten Temperatur aufkaschiert wird.

8. Verfahren nach Anspruch 6 bis 7, **dadurch gekennzeichnet, daß** das Formteil zur Restentgasung sowie zur Herstellung der endgültigen Formstabilität und des Endmaßes noch bei einer Temperatur von 80°C bis 100°C thermisch nachbehandelt wird.

9. Verfahren nach Anspruch 1 bis 8, **dadurch gekennzeichnet, daß** der expandierende Partikelschaum oder die geschäumten Formteile aus expandierendem Polystyrol (EPS), einem expandierendem Compound bestehend aus EPS und Polyphenylenoxyd (EPS/PPO), expandierendem Polyethylen (EPE) oder expandierendem Polypropylen (EPP) bestehen.

10. Verfahren nach Anspruch 1 bis 9, **dadurch gekennzeichnet, daß** es sich bei den textilen Flächengebilden um Textilien, Fasern, Garnen, Gewirre oder Gelege aus Glasfaser, Kohlefaser oder Aramidfaser handelt.

11. Kaschiererzeugnisse aus expandiertem Partikelschaum und einem darauf aufkaschierten textilen Flächengebilde, gebunden mit einem pulverförmigen Polymer auf der Basis von Mischpolymerisaten von einem oder mehreren Monomeren aus der Gruppe umfassend Vinylester, Acrylsäureester, Methacrylsäureester, Vinylaromaten und Vinylchlorid und von 0.01 bis 25 Gew%, bezogen auf das Gesamtgewicht des Mischpolymerisats, von einem oder mehreren ethylenisch ungesättigten, carboxylgruppenhaltigen Monomeren.

12. Verwendung der Kaschiererzeugnisse nach Anspruch 11 als Formteile zum Einbau in Kraftfahrzeuge, Flugzeuge, Wasserfahrzeuge oder in andere Maschinen und Haushaltsgeräte.

## Claims

1. Process for laminating textile sheet materials onto mouldable foam or onto foamed mouldings, using, as adhesive, a pulverulent polymer preparation based on copolymers of one or more monomers selected from the group comprising vinyl esters, acrylates, methacrylates, vinylaromatics and vinyl chloride and from 0.01 to 25% by weight, based on the total weight of the copolymer, of one or more ethylenically unsaturated monomers containing carboxyl groups.

2. Process according to Claim 1, **characterized in that** use is made of copolymers of vinyl acetate, if desired with other vinyl esters; of vinyl chloride, if desired with vinyl acetate; of vinyl acetate with methacrylates or acrylates; of methacrylates and/or acrylates; or of styrene and acrylates, in each case containing from 0.01 to 25% by weight of ethylenically unsaturated mono- or dicarboxylic acids.

3. Process according to Claim 1 or 2, **characterized in that** in each case the copolymers contain from 0.01 to 10% by weight of acrylic acid and/or methacrylic acid, if desired combined with from 0.01 to 2% by weight of acrylamide.

4. Process according to Claims 1 to 3, **characterized in that** the composition of the copolymer is selected so as to give a glass transition temperature Tg or a melting point of above 30°C.

5. Process according to Claims 1 to 4, **characterized in that** the polymer preparation also comprises from 0.1 to 25% by weight, based on the pulverulent copolymer, of solid pulverulent compounds which have two or more epoxy or isocyanate groups, with a melting point of from 40 to 150°C.

6. Process according to Claims 1 to 5, **characterized in that** the polymer preparation is applied to the textile sheet material, the polymer beads to be foamed are introduced in a mould, and the foam is foamed against the textile sheet material provided with the polymer powder preparation.

7. Process according to Claims 1 to 5, **characterized in that** the polymer preparation is applied to a textile ready-sheet material or to a ready-made foamed moulding and then the textile sheet material is laminated onto the moulding using an elevated pressure and an elevated temperature.

8. Process according to Claim 6 or 7, **characterized in that** the moulding is then thermally post-treated at a temperature of from 80 to 100°C to remove residual gases or else to produce its final dimensional stability and final dimensions.

9. Process according to Claims 1 to 8, **characterized in that** the mouldable foam or the foamed mouldings are composed of expandable polystyrene (EPS), of an expandable composition composed of EPS and polyphenylene oxide (EPS/PPO), of expandable polyethylene (EPE) or of expandable polypropylene (EPP).

10. Process according to Claims 1 to 9, **characterized in that** the textile sheet materials involve textiles, fibres, yarns, mats or laid scrims made from glass fibre, carbon fibre or aramid fibre.

11. Laminated products made from moulded foam and, laminated onto this, a textile sheet material, bonded using a pulverulent polymer based on copolymers of one or more monomers selected from the group comprising vinyl esters, acrylates, methacrylates, vinylaromatics and vinyl chloride and on from 0.01 to 25% by weight, based on the total weight of the copolymer, of one or more ethylenically unsaturated monomers containing carboxyl groups.

12. Use of the laminated products according to Claim 11 as mouldings for incorporation into motor vehicles, aircraft or watercraft, or into other machinery or household devices.

## Revendications

1. Procédé de stratification de nappes textiles sur de la mousse particulaire expansée ou des pièces moulées moussées en utilisant, en tant qu'adhésif, une préparation polymère pulvérulente à base de copolymères d'un ou de plusieurs monomères parmi le groupe constitué d'esters vinyliques, d'esters acryliques, d'esters méthacryliques, de composés vinylaromatiques et du chlorure de vinyle, et de 0,01 à 25 % en poids, par rapport au poids total du copolymère, d'un ou de plusieurs monomères éthyléniquement insaturés renfermant des groupes carboxy.

2. Procédé selon la revendication 1, **caractérisé en ce que** l'on utilise des copolymères d'acétate de vinyle, éventuellement avec d'autres esters vinyliques ; de chlorure de vinyle, éventuellement avec de l'acétate de vinyle ; d'acétate de vinyle avec des esters méthacryliques ou des esters acryliques ; d'esters méthacryliques et/ou d'esters acryliques ; de styrène et d'esters acryliques, renfermant dans chaque cas de 0,01 à 25 % en poids d'acides mono- ou dicarboxyliques éthyléniquement insaturés.

3. Procédé selon la revendication 1 ou 2, **caractérisé en ce que** les copolymères renferment dans chaque cas de 0,01 à 10 % en poids d'acide acrylique et/ou d'acide méthacrylique, éventuellement en combinaison avec de 0,01 à 2 % en poids d'acrylamide.

4. Procédé selon les revendications 1 à 3, **caractérisé en ce que** la composition du copolymère est choisie de telle sorte qu'il en résulte une température de transition vitreuse Tv ou un point de fusion supérieur à 30°C.

5. Procédé selon les revendications 1 à 4, **caractérisé en ce que** la préparation polymère comprend également de 0,1 à 25 % en poids, par rapport au copolymère pulvérulent, de composés solides pulvérulents renfermant deux groupes époxyde ou isocyanate ou plus, présentant un point de fusion de 40°C à 150°C.

6. Procédé selon les revendications 1 à 5, **caractérisé en ce que** la préparation polymère est appliquée sur la nappe textile, les particules polymères destinées à être moussées sont introduites dans un moule et la mousse est moussée contre la nappe textile pourvue de la préparation polymère pulvérulente.

7. Procédé selon les revendications 1 à 5, **caractérisé en ce que** la préparation polymère est appliquée sur une nappe textile ou une pièce moulée moussée déjà finie et la nappe textile est ensuite stratifiée sur la pièce moulée mise en forme finie en employant une pression accrue et une température accrue.

8. Procédé selon les revendications 6 et 7, **caractérisé en ce que** la pièce moulée est alors soumise à un post-traitement thermique à une température de 80 à 100°C en vue d'éliminer les gaz résiduels ainsi qu'en vue de produire la stabilité dimensionnelle finale et la dimension finale.

9. Procédé selon les revendications 1 à 8, **caractérisé en ce que** la mousse particulaire expansée ou les pièces moulées moussées sont constituées de polystyrène expansé (EPS), d'un compound expansé constitué de EPS et de polyoxyde de phénylène (EPS/PPO), de polyéthylène expansé (EPE) ou de polypropylène expansé (EPP).

10. Procédé selon les revendications 1 à 9, **caractérisé en ce que** les nappes textiles sont des textiles, des fibres, des fils, des mats ou des nappes tissées composés de fibre de verre, de fibre de carbone ou de fibre d'aramide.

11. Produits stratifiés composés de mousse particulaire expansée et d'une nappe textile stratifiée sur celle-ci, liées à l'aide d'un polymère pulvérulent à base de copolymères d'un ou de plusieurs monomères parmi le groupe constitué d'esters vinyliques, d'esters acryliques, d'esters méthacryliques, de composés vinylaromatiques et du chlorure de vinyle, et de 0,01 à 25 % en poids, par rapport au poids total du copolymère, d'un ou de plusieurs monomères éthyléniquement insaturés renfermant des groupes carboxy.

12. Utilisation des produits stratifiés selon la revendication 11 en tant que pièces moulées destinées à être incorporées dans des véhicules automobiles, des avions, des navires ou dans d'autres machines et appareils ménagers.
